Europäisches Patentamt

European Patent Office

Office européen des brevets

(19)

(11) Publication number:

**0 392 639**
**A2**

## (12) EUROPEAN PATENT APPLICATION

(21) Application number: **90200910.9**

(22) Date of filing: **12.04.90**

(51) Int. Cl.⁵: **G01N 27/22, G01R 27/26**

(30) Priority: **13.04.89 NL 8900930**

(43) Date of publication of application:
**17.10.90 Bulletin 90/42**

(84) Designated Contracting States:
**BE ES FR NL**

(71) Applicant: **Rockwool/ Grodan B.V.**
**Industrieweg 15**
**NL-6074 NH Melick-Herkenbosch(NL)**

(72) Inventor: **Hilhorst, Maximus Andreas**
**Grietjeshof 29**
**NL-6721 VG Bennekom(NL)**

(74) Representative: **Land, Addick Adrianus**
**Gosling et al**
**OCTROOIBUREAU ARNOLD & SIEDSMA**
**Sweelinckplein 1**
**NL-2517 GK Den Haag(NL)**

(54) Method and device for measuring the moisture content of a substrate for growing.

(57) A method for measuring the moisture of water content of a substrate or growing product for growing plants of which at least a part consists of artificial material, wherein a capacitance value of said substrate is measured between two or more electrodes.

EP 0 392 639 A2

# METHOD AND DEVICE FOR MEASURING THE MOISTURE CONTENT OF A SUBSTRATE FOR GROWING.

The success of substrate culture raises the question of to what extent new plants can be cultivated on such artificial substrates. Necessary for this purpose is an accurate analysis of the conditions under which plants grow on substrates, particularly rock-wool. The feed and discharge of water, whether provided with fertilizer or not, is to be controlled subject to the quantity of moisture which is taken up over a length of for instance a number of metres of substrate by the plants growing on the substrate. Such a method and device for a mineral wool culture of plants with suction pressure control is known from European patent application EP-A-0 300 536.

It is an object of the present invention to improve upon the above prior art and provide a novel method and device according to claim 1,5 respectively.

Preferably also the resistance value between the electrodes is measured, as the results thereof indicate the amount of fertilizer present in the substrate.

The relative water content in rockwool (and other mineral wools) can mount up to 80-90%, contrary to ± 20% in soil.

Further a measuring device is provided, in which circuitry is included for compensating the resistance value for the capacitance value, as the influence on this resistance value in considerable, especially at high moisture values, for which the circuitry is dimensioned.

Preferably the measuring device is constructed according to claims 7,8 or 9, such that bending of the electrodes is prevented.

Further features, details and advantages of the present invention will become apparent in the light of a description with reference to the annexed drawing, wherein:

fig. 1 shows an embodiment of substrate culture wherein the method and device according to the present invention are applied;

fig. 2 is a preferred embodiment of a sensor unit according to the present invention; and

fig. 3 is another embodiment of a sensor for a measuring device according to the present invention.

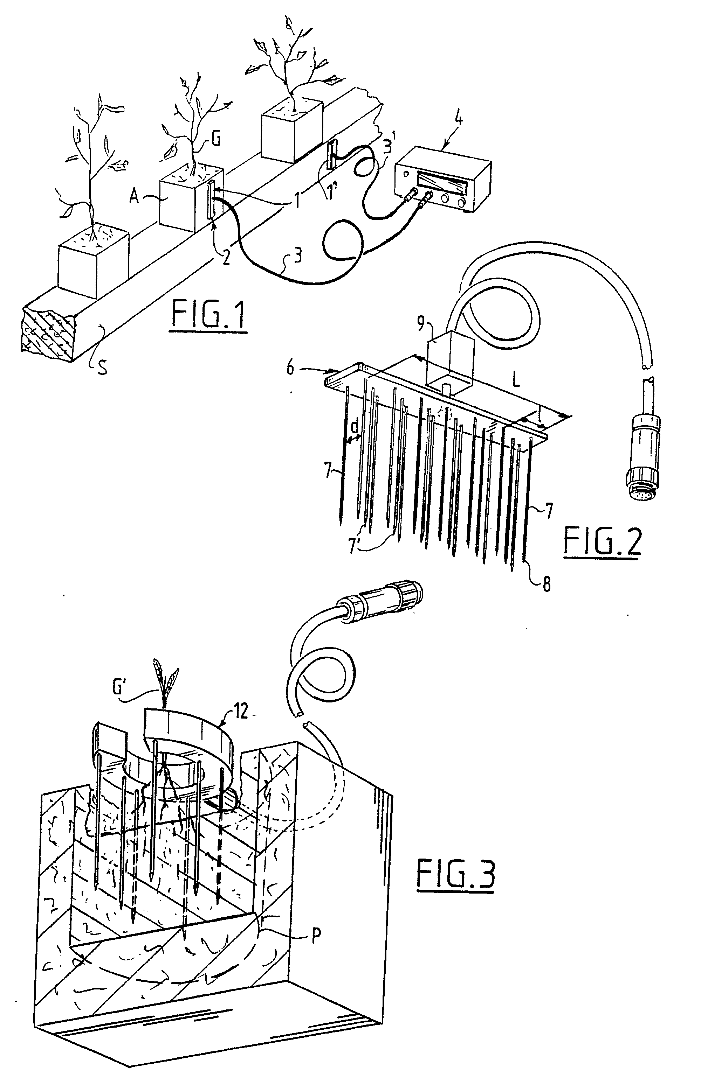

A plant G (fig. 1) grows on substrate S in a rockwool block A such as available on the market under the trade name Grodan. A sensor unit 1 preferably has approximately the same height as block A and is inserted therein. Protruding from the block A in the present embodiment is a housing 2 in which electronics are arranged. Via an electric lead 3 the sensor unit 1 is connected to a meter case 4 to which can be connected a number of sensor units (1'), for instance inserted in the substrate S.

Details of electronics of sensor units are described in the Netherlands patent application 78.02100 as well as in the article of M.A.Hilhorst: "A sensor for the determination of the complex permittivity of materials as a measure for the moisture content", published in the symposium report of "Sensors and actuators" Enschede (NL), 1984. These cited literature references relate to the performing of measurements on soil to determine the moisture content thereof (moisture content variation in soil ± 0.2%/cm). This article is deemed to be inserted here.

A sensor unit 6 comprises relatively strong and thin pins 7, of a number in the embodiment shown of for instance twenty (fig. 2), wherein inner pins 7' are enclosed in each case by four outer pins.

Extensive computer simulations have demonstrated that, if in the case of the disposition shown of twenty pins having a mutual interval d in transverse direction of approximately 9 mm and a total length L between the first and last pin of approximately 100 mm and therefore a mutual interval of two outer pins 1 of approximately 16 mm, the high frequency electric alternating field to be applied from the meter case 4 extends virtually wholly within the space covered by the pins. These stated mutual intervals of the pins are of course adapted to the usually-standardized substrate dimensions in different cultivating stages.

By successively applying the high frequency setting field between successive inner pins and outer pins located therearound, a relation or "profile" of the (local) moisture content and position in the substrate is obtained.

In the embodiment shown in fig. 2 the pins have a length of roughly 47 mm and a diameter of roughly 1 mm. Further a length of about 60-70 mm (preferably spaced at ± 25 mm) is preferred with regard to the stated standard dimensions. At the ends the pins are provided with a piercing point 8.

In order to further facilitate insertion and prevent bending or breaking, the pins have to be thin (< 1mm) and stif. Owing to the impedance matching at the frequency employed (100 kHz to 20 MHz), the electronics can be located at a short distance from the sensor unit. If possible the electronics are incorporated in the meter case. If the line 3 has a length of 75 cm a good matching for the above frequencies can be achieved.

The embodiment of a sensor unit 12 according to the present invention shown in fig. 3 is particularly suitable for moisture content measurement in the area around a plant G' arranged in a plug-like substrate P. In this case pins having a length of about 18-20 mm and a spacing of 7 mm are preferred. A measured value is an average along a pin; measuring can therefore be carried out using both lying and standing pins.

The present invention is not limited to the embodiment shown: a simpler embodiment that can be used for both substrate mats and blocks in a well-manageable manner comprises for instance three pins forming a measurement field of 72 x 30 x 50 mm³.

Measurements have been made for rock-wool provided with 20-90% by volume of water. Both the reproducibility and the measuring accuracy of the measurements was smaller than 3%.

## Claims

1. A method for measuring the moisture of water content of a substrate or growing product for growing plants of which at least a part consists of artificial material, wherein a capacitance value of said substrate is measured between two or more electrodes.

2. A method according to claim 1, wherein a resistance value of said substrate is measured between the electrodes.

3. A method according to claim 1 or 2, in which said artificial material comprises mineral wool, preferably rockwool.

4. A measuring device for performing the method as claimed in any one of the claims 1-4.

5. A measuring device comprising:
- two or more pin-like elements for inserting into a growing substrate, preferably provided with a piercing point;
- circuitry for providing a High-Frequency field between the electrodes and for measuring the capacitance between the electrodes; and
- a display connected to said circuitry for displaying a moisture value.

6. A measuring device for performing the method of claim 2, 3 or 4, comprising:
- second circuitry for measuring the resistance value between the electrodes; and
- compensating means for compensating the resistance value for the measured capacitance value.

7. A measuring device according to claim 4 or 5, provided with pin-like elements for inserting into the substrate and made of rust proof steel.

8. A measuring device according to claim 6 in which the rust proof steel has a tensile strength of 1800-2000 Newton/mm².

9. A measuring device according to claim 7 or 8, wherein said steel is Remanium®.

EP 0 392 639 A2

FIG.1

FIG.2

FIG.3